**Europäisches Patentamt**

**European Patent Office**

**Office européen des brevets**

(19)

(11) Veröffentlichungsnummer: **0 099 501**
**B1**

# EUROPÄISCHE PATENTSCHRIFT

(12)

(45) Veröffentlichungstag der Patentschrift:
**29.04.87**

(51) Int. Cl.⁴: **F 01 K 17/02**

(21) Anmeldenummer: **83106474.6**

(22) Anmeldetag: **02.07.83**

(54) **Verfahren zum Verändern der Abgabe von elektrischer Energie eines Heizkraftwerkes ohne Beeinflussung der Wärmeabgabe an angeschlossene Wärmeverbraucher.**

(30) Priorität: **15.07.82 DE 3226429**

(43) Veröffentlichungstag der Anmeldung:
**01.02.84 Patentblatt 84/5**

(45) Bekanntmachung des Hinweises auf die Patenterteilung:
**29.04.87 Patentblatt 87/18**

(84) Benannte Vertragsstaaten:
**AT BE CH FR LI NL**

(56) Entgegenhaltungen:
**EP-A-0 000 135**
**EP-A-0 008 680**
**CH-A-304 499**
**FR-A-2 334 825**
**US-A-4 093 868**

(73) Patentinhaber: **BROWN, BOVERI & CIE Aktiengesellschaft, Kallstadter Strasse 1, D-6800 Mannheim 31 (DE)**

(72) Erfinder: **Schüller, Karl- Heinz, Daimlerstrasse 5, D-6840 Lampertheim (DE)**

(74) Vertreter: **Kempe, Wolfgang, Dr., c/o BROWN, BOVERI & CIE AG ZPT Postfach 351, D-6800 Mannheim 31 (DE)**

## Beschreibung

<u>Verfahren zum Verändern der Abgabe von elektrischer Energie eines Heizkraftwerkes ohne Beeinflußung der Wärmeabgabe an angeschlossene Wärmeverbraucher</u>

Die Erfindung betrifft ein Verfahren zum Verändern der Abgabe von elektrischer Energie eines Heizkraftwerkes ohne Beeinflußung der Wärmeabgabe an angeschlossene Wärmeverbraucher, wobei die elektrische Energie in wenigstens einem von mindestens einer Gegendruck-Dampfturbine angetriebenem elektrischen Generator erzeugt wird und die Wärmeabgabe durch einen mit Anzapfdampf beheizten Heizungswasser-Wärmetauscher erfolgt, der durch mindestens jeweils eine Heizungsvorlaufleitung und eine Heizungsrücklaufleitung mit wenigstens einem Wärmeverbraucher verbunden ist. Außerdem betrifft die Erfindung eine Anlage zur Durchführung des Verfahrens.

Beim Betrieb eines Heizkraftwerkes, in dem elektrische Energie mit Hilfe von Gegendruck-Dampfturbinen sowie Heizwärme durch nachgeschaltete Wärmetauscher erzeugt werden, steht die Abgabe von elektrischer Energie in einem zwangsläufigen Verhältnis zur Abgabe von Heizwärme. Da die Leistung des Heizkraftwerkes in erster Linie entsprechend dem Bedarf an Heizwärme eingestellt wird, ist es kaum möglich, eine von der Heizwärmeabgabe unabhängige elektrische Energieabgabe zu erzielen.

Bei einer bekannten Gasturbinen-Dampfkraftanlage zur Erzeugune von mechanischer und/oder elektrischer Energie wird zusätzlich Warmwasser mit Hilfe von Abwärme sowie durch eine Wärmepumpe erzeugt, deren Verdichter von einem Elektromotor oder durch eine lösbare Wellenkupplung von der Dampfturbine der Dampfkraftanlage antreibbar ist (FR-A-2 334 825). Hierbei sind Speicherbehälter an die Warmwasservorlauf- und Rücklaufleitung angeschlossen. Besteht im Versorgungsnetz ein Überangebot an elektrischer Energie, so wird die Gasturbinen-Dampfkraftanlage abgestellt, die Dampfturbine vom elektrischen Generator der Dampfkraftanlage abgekuppelt, der Generator jetzt als Elektromotor eingesetzt und zum Antrieb des Verdichters der Wärmepumpe benutzt, die die Erzeugung des Warmwassers allein übernimmt. Eine weitere Beeinflussung der elektrischen Energieabgabe ist nicht vorgesehen.

Desweiteren ist durch die EP-A1-0 000 135 eine Anlage zur zentralen Erzeugung von thermischer Nutzenergie in Form von Heizwasser bekannt geworden. Diese Anlage weist eine von einem Dampfkessel gespeiste Gegendruckdampfturbine auf, die den Verdichter einer Wärmepumpe antreibt. Zur Erwärmung des Heizwassers wird dieses durch Wärmetauscher geführt, die durch Gegendruckdampf der Dampfturbine beaufschlagt oder als Kondensator der Wärmepumpe eingesetzt sind. Eine Erzeugung von elektrischer Energie für Abgabe am Versorgungsnetz findet nicht statt.

Ausgehend vom genannten Stand der Technik liegt der Erfindung daher die Aufgabe zugrunde, ein Verfahren zum Verändern der Abgabe von elektrischer Energie eines Heizkraftwerkes ohne Beeinflußung der Wärmeabgabe an angeschlossene Wärmeverbraucher der eingangs genannten Art anzugeben, das einfach, kostengünstig und mit möglichst hohem Wirkungsgrad durchzuführen ist. Insbesondere soll es möglich sein, die elektrische Energieabgabe an z. B. täglich auftretende Spitzenlast- und Schwachlastperioden bezüglich des elektrischen Energieverbrauchs leicht anpassen zu können.

Die Lösung dieser Aufgabe besteht nun erfindungsgemäß darin, daß zur Verringerung der elektrischen Energieabgabe mit wenigstens einem Teil der unter Verwendung der Dampfturbine erzeugten Energie der Verdichter einer Wärmepumpe angetrieben wird, durch die Wärmepumpe zuvor gespeichertes Heizungs-Rücklaufwasser unter Heizungswasser-Rücklauftemperatur abgekühlt und als Kaltwasser gespeichert wird, wobei die bei der Abkühlung gewonnene Wärmeenergie dem Heizungswasser zugeführt wird, und daß zur Steigerung der elektrischen Energieabgabe die gesamte in der Dampfturbine erzeugte Energie in elektrische Energie umgewandelt an die Verbraucher abgegeben wird und gleichzeitig die Temperatur des Heizungs-Rücklaufwassers vor seinem Eintritt in den Heizungswasser-Wärmetauscher durch das Kaltwasser unter Heizungs-Rücklauftemperatur abgesenkt wird und daß in beiden Betriebszuständen die Dampfzufuhr zur Dampfturbine jeweils so geregelt wird, daß die Wärmeabgabe an die Wärmeverbraucher in der gewünschten Größe eingehalten wird.

Es wird also für eine elektrische Energieabgabe, die geringer ist als jene elektrische Energieabgabe, die sich durch die vorgegebene Heizwärme-Abgabe zwangsläufig ergeben würde, eine Wärmepumpe im Betrieb genommen. Diese nimmt den Leistungsüberschuß der Dampfturbine auf, der sich durch die verringerte Stromerzeugung ergibt, so daß Leistungsgleichgewicht zwischen Dampfturbine, elektrischem Generator und Wärmepumpe besteht. Die Wärmepumpe kühlt hierbei insbesondere zuvor gespeichertes Rücklaufwasser ab, das dann als Kaltwasser gespeichert wird. Die in der Wärmepumpe rückgewonne Wärmeenergie wird zur Erwärmung des Heizungswassers eingesetzt. Somit verbleibt die von der Dampfturbine abgegebene Überschußenergie innerhalb des Systems, so daß der Gesamtwirkungsgrad der Anlage in diesem Betriebszustand nicht vermindert ist. Der Verdichter der Wärmepumpe kann hierbei über eine lösbare Kupplung von der Welle der Dampfturbine angetrieben werden. Ist jedoch eine räumliche Trennung von Dampfturbine und Wärmepumpe, z. B. bei eingeschränkten Platzverhältnissen, erforderlich, so ist es empfehlenswert, den Verdichter durch einen Elektromotor anzutreiben, dessen Antriebsenergie vom elektrischen Generator des Heizkraftwerks geliefert wird.

Soll dagegen die elektrische Energieabgabe auf ein Maß gesteigert werden, das nicht mehr der zwangsläufig gekuppelten Heizwärmeabgabe entspricht, so wird die gesamte von der Dampfturbine abgegebene Leistung dem elektrischen Generator zugeführt, dort in elektrische Energie umgewandelt und den Verbrauchern zugeführt, das heißt, die Wärmepumpe ist in diesem Falle außer Betrieb. Gleichzeitig wird das dem Heizungswasser-Wärmetauscher zuströmende Rücklaufwasser unter Rücklauftemperatur abgekühlt. Hierzu wird das Kaltwasser benutzt, das beim Betrieb zur Verringerung der elektrischen Energieabgabe erzeugt und gespeichert wurde. Zur Aufheizung des zusätzlich abgekühlten Rücklaufwassers auf Heizungs-Vorlauftemperatur ist jetzt eine erhöhte Dampfzufuhr zum Heizungswasser-Wärmetauscher erforderlich, mit der Folge, daß der Dampfdurchsatz durch die Gegendruck-Dampfturbine ebenfalls erhöht werden muß. Hierbei steigt die Leistungsabgabe der Dampfturbine an, so daß mehr Leistung für die Erzeugung von elektrischer Energie zur Verfügung steht.

Die Zufuhr des Dampfes zur Dampfturbine wird in den beiden vorgeschriebenen Betriebszuständen in Abhängigkeit von der Heizungswasser-Vorlauftemperatur oder in Abhängigkeit vom Heiz-Dampfdruck, das heißt vom Wärmebedarf des Heizsystems, gesteuert. Hierdurch wird sichergestellt, daß die Heizwärme-Abgabe unbeeinflußt bleibt von der Leistungsabgabe der Dampfturbine, zum anderen wird erreicht, daß im Falle der gesteigerten elektrischen Energieabgabe die erhöhte Heizdampfzufuhr zum Heizungswasser-Wärmetauscher ohne großen Aufwand bewirkt wird.

Zusammenfassend kann somit festgehalten werden, daß durch das erfindungsgemäße Verfahren ein Weg gezeigt wurde, wie die Stromabgabe eines Heizkraftwerks an die sich ändernden Netzanforderungen auf einfache Weise angepaßt werden kann, während die geforderte Heizwärmeabgabe unberührt bleibt. Es wird die in der Schwachlastperiode des Stromnetzes anfallende Turbinenleistung in höherwertigen Spitzenlaststrom transformiert, wobei der Vorteil gegeben ist, daß keine Kondensationswärme an die Umgebung abgegeben werden muß.

Während des Betriebs mit gesteigerter elektrischer Energieabgabe kann das Rücklaufwasser unter Zwischenschaltung eines Wärmetauschers gekühlt werden. Eine besonders bevorzugte Weiterbildung der Erfindung besteht jedoch darin, daß das Rücklaufwasser durch die direkte Zufuhr des Kaltwassers abgekühlt wird und daß eine mit der zugeführten Kaltwassermenge gleiche Menge ungekühltes Rücklaufwasser dem Heizsystem entnommen, gespeichert und für die Abkühlung durch die Wärmepumpe während des Betriebs mit verringerter elektrischer Energieabgabe bereitgehalten wird. Das Kaltwasser wird dem Rücklaufwasser beigemischt und eine gleiche Menge Rücklaufwasser dem Heizsystem entnommen und gespeichert. Hierdurch ist eine wirkungsvolle und verlustarme Abkühlung des Rücklaufwassers sichergestellt und gleichzeitig Vorsorge für einen einfachen periodischen Betrieb getroffen. Darüber hinaus bleibt der Wasserinhalt des Heizsystems unbeeinflußt.

Eine andere empfehlenswerte Ausgestaltung der Erfindung kann auch darin bestehen, daß die dem Rücklaufwasser zugeführte Kaltwassermenge je Zeiteinheit gleich ist jener Menge des Rücklaufwassers die in der Zeiteinheit dem Heizkraftwerk bzw. dem Wasserspeicherraum zugeführt wird. Mit anderen Worten bedeutet dies, daß das gesamte von den Verbrauchern zurückströmende Rücklaufwasser dem Heizsystem entnommen und gespeichert wird, während eine gleichgroße Kaltwasgermenge dem Heizungs-Wärmetauscher zur Erwärmung zugeführt wird. Hierdurch wird der Wärmebedarf des Wärmetauschers zur Erwärmung des Heizungswassers auf einen maximalen Wert gesteigert und somit die bei den vorliegenden Betriebsumständen maximal mögliche elektrische Energieabgabe ausgelöst.

Eine weitere Maßnahme, welche eine Steigerung der elektrischen Energieabgabe fördert, besteht vorteilhaft darin, daß der Dampfdurbine mindestens ein Turbinen-Niederdruckteil zugeschaltet wird, das eine zugeordnete Stufe des Heizungswasser-Wärmetauschers mit Heizdampf versorgt. Das Niederdruckteil kann hierbei unmittelbar im Dampfturbinengehäuse angeordnet sein, jedoch ist es auch möglich, dieses als separates Bauteil auszubilden, wobei die Welle der Dampfturbine und die Welle des Niederdruckteils gekuppelt sind.

Zur Verbesserung des Prozeßwirkungsgrades kann eine andere Ausgestaltung der Erfindung darin bestehen, daß das Rücklaufwasser in mehreren Stufen des Heizungswasser-Wärmetauschers aufgeheizt wird.

Um auch den Wärmepumpenbetrieb mit gutem Wirkungsgrad durchführen zu können, empfiehlt es sich, daß das Wasser bzw. Rücklaufwasser in mehreren Stufen des Wärmepumpen-Verdampfers abgekühlt wird, wobei vorzugsweise die Verdichtung des Arbeitsmediums der Wärmepumpe in mehreren Stufen erfolgt. Eine in die gleiche Richtung zielende Maßnahme ist vorteilhaft dadurch gekennzeichnet, daß das Arbeitsmedium der Wärmepumpe vor dem Eintritt in den Verdichter durch das aus dem Wärmepumpen-Kondensator austretende Arbeitsmedium überhitzt wird.

Eine besonders empfehlenswerte Anlage zur Durchführung des erfindungsgemäßen Verfahrens mit mindestens einer Gegendruck-Dampfturbine, einem an diese gekuppelten elektrischen Generator, einem durch einen Elektromotor oder durch eine lösbare Wellenkupplung von der Dampfturbine antreibbaren Verdichter der Wärmepumpe , sowie mit mindestens einem Heizungswasser-Wärmetauscher, der zur Heizdampfversorgung an die Dampfturbine angeschlossen und durch jeweils mindestens eine Heizungswasser-Vorlaufleitung und Heizungswasser-Rücklaufleitung an wenigstens einen Wärmeverbraucher angeschlossen ist, kennzeichnet sich dadurch, daß der Elektromotor vom Generator speisbar ist, daß der Wärmepumpen-Kondensator zur Wärmeabgabe an das Heizungswasser an die Vorlaufleitung und Rücklaufleitung unter Einfügung eines Absperrorgans angeschlossen ist, daß die Rücklaufleitung eine Abzweigstelle aufweist, von der eine Zweigleitung ausgeht, die stromab der Abzweigstelle an der Anschluß-Stelle wieder in die Rücklaufleitung mündet, wobei zwischen der abzweigstelle und der Anschlußstelle ein fünftes Absperrorgan eingefügt ist, daß die Zweigleitung, in Strömungsrichtung gesehen, ein zweites Absperrorgan, einen Wasserspeicherraum, eine Pumpe, den Verdampfer der Wärmepumpe, einen Kaltwasserspeicherraum, eine zweite Pumpe sowie ein drittes Absperrorgan enthält, dan zwischen der Anschlußstelle und dem Heizungswasser-Wärmetauscher ein viertes absperrorgan in die Heizungs-Rücklaufleitung eingefügt ist und daß in der Dampfzuleitung zur Dampfturbine ein Durchflußregelorgan angeordnet und zur Steuerung mit einem die Vorlauftemperatur erfanenden Temperaturfühler oder einem dem Heizdampfdruck erfaßenden Druckfühler verbunden ist.

Diese Anlage verbindet vertretbaren technischen Aufwand mit der Möglichkeit eines einfachen periodischen Betriebes.

Hierbei kann zur weiteren Steigerung der elektrischen Energieabgabe der Heizungswasser-Wärmetauscher mehrere Wärmetausch-Stufen aufweisen, von denen wenigstens eine Stufe zur Heizdampfversorgung mit einem der Dampfturbine zuschaltbaren Dampfturbinen-Niederdruckteil verbunden ist.

Weitere Vorteile und Merkmale der Erfindung gehen aus der folgenden Beschreibung von Ausführungsbeispielen im Zusammenhang mit dem schematischen Zeichnungen hervor.

Hierbei zeigen:

Fig. 1 ein Heizkraftwerk gemäß der Erfindung mit einer lösbaren mechanischen Kupplung zwischen der Turbinen- und der Verdichterwelle sowie mit einstufiger Erwärmung des Heizungswassers,

Fig. 2 die Einzelheit II der Fig. 1 als Ausführungsvariante,

Fig. 3 eine andere Ausführungsvariante des Gegenstands der Fig. 1 mit mehrstufiger Heizwasser-Erwärmung,

Fig. 4 eine Ausführungsvariante des Gegenstands der Fig. 3 mit mehrstufiger Erwärmung des Heizungswassers und mehrstufiger Verdichtung des Wärmepumpen-Arbeitsmedium mit vorgeschalteter Überhitzung,

Fig. 5 eine weitere Ausführungsvariante des Gegenstands der Fig. 1 mit einem der Dampfturbine zugeschalteten Dampfturbinen-Niederdruckteil und

Fig. 6 eine Ausführungsvariante des Gegenstands der Fig. 5 mit mehrstufiger Heizwasser-Erwärmung, mehrstufiger Verdichtung des Wärmepumpen-Arbeitsmediums mit vorgeschalteter Überhitzung.

Gleiche Teile sind in den einzelnen Figuren mit den gleichen Bezugzeichen versehen. Auch sind in den einzelnen Figuren wiederkehrende Einzelteile nur in soweit mit Bezugzeichen versehen, als dies für das Verständnis erforderlich ist.

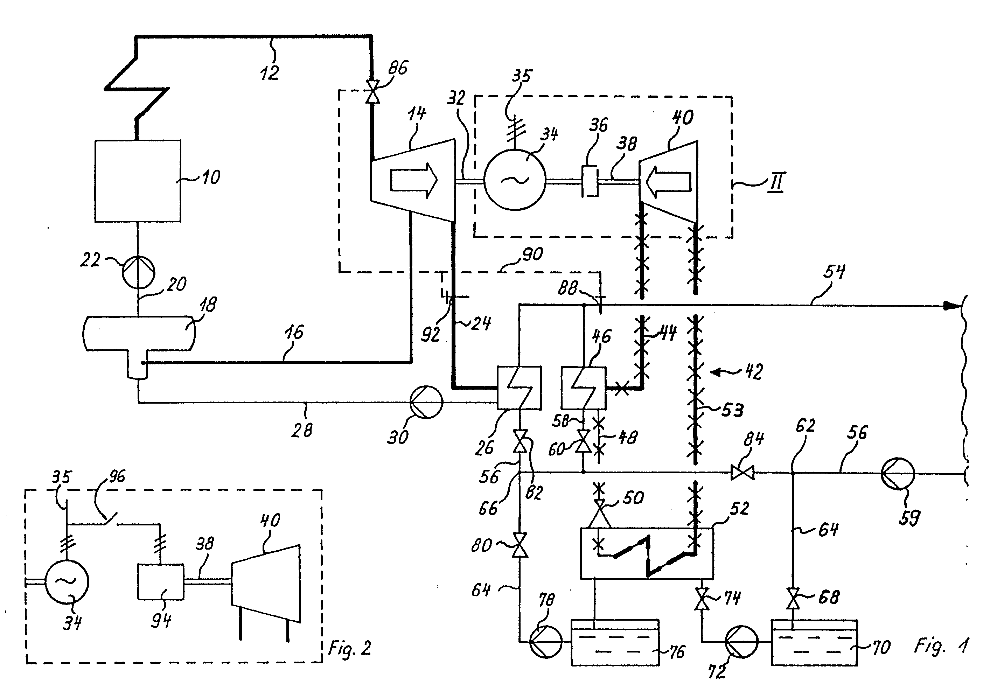

Des in Fig. 1 dargestellte Heizkraftwerk weist einen Dampfkessel 10 auf, der durch die Dampfzufuhrleitung 12 mit dem Eingang der Gegendruck-Dampfturbine 14 verbunden ist. Eine Anzapfung der Dempfturbine ist über eine Rohrleitung 16 mit einem dampfbeheizten Speisewasserbehälter 18 verbunden, der durch eine Speisewasserleitung 20 mit eingefügter Speisewasserpumpe 22 an den Dampfkessel angeschlossen ist. Eine andere Anzapfung ist durch die Rohrleitung 24 mit der Primärseite des Heizungswasser-Wärmetauschers 26 verbunden, von der eine Kondensatleitung 28 mit eingefügter Kondensatpumpe 30 zum Speisewasserbehälter 18 führt.

Die Welle 32 der Dampfturbine 14 ist mit der Welle des elektrischen Generators 34 verbunden; eine weitere Verbindung der Welle 32 besteht zur Welle 38 des Verdichters 40 der Wärmepumpe 42. Die Verbindung dieser beiden Wellen geschieht hierbei durch die lösbare Kupplung 36, so daß der Verdichter 40 vom Antrieb getrennt werden kann. Die Abgabe der elektrischen Energie an ein nicht dargestelltes Stromversorgungsnetz erfolgt durch die vom Generator 34 ausgehende elektrische Leitung 35.

Von der Druckseite des Verdichters 40 führt eine Rohrleitung 44 zur Primärseite des Wärmepumpen-Kondensators 46. Diese ist über eine weitere Leitung 48 mit eingeschaltetem Entspannungsventil 50 mit der Primärseite des Wärmepumpen-Verdampfers 52 verbunden. Um den Kreislauf zu schließen, führt von hier eine Rohrleitung 53 zur Saugseite des Verdichters 40.

Das Heizungssystem, an welches das Heizkraftwerk Heizwärme abgibt, besitzt eine Heizungswasser-Vorlaufleitung 54, welche die wärmeabgebenden Sekundärseiten des Heizungswasser-Wärmetauschers 26 und des Wärmepumpen-Kondensators 46 mit dem in Fig. 1 nicht dargestellten Wärmeverbraucher verbindet. Anstelle eines einzigen Wärmeverbrauchers können selbstverständlich auch mehrere Wärmeverbraucher vorgesehen sein. Für die Rückleitung des abgekühlten Heizungswassers ist die Heizungswasser-Rücklaufleitung 56 mit eingeschalteter Umwälzpumpe 59 vorgesehen, welche von dem Wärmeverbraucher zur Sekundärseite des Heizungswasser-Wärmetauschers 26 führt. Ebenso ist die Rücklaufleitung 56 durch eine Rohrleitung 58 mit eingeschaltetem Absperrorgan 60 an die Sekundärseite des Wärmepumpen-Kondensators 46 angeschlossen.

Stromaufwärts der Anschlüsse der Rücklaufleitung 56 an den Wärmetauscher 26 und an den Kondensator 46 ist eine Abzweigstelle 62 in der Rücklaufleitung 56 vorgesehen. Von dieser Abzweigstelle 62 geht eine Zweigleitung 64 aus, die stromabwärts der Abzweigstelle 62 an der Anschlußstelle 66 wieder in die Rücklaufleitung mündet.

In Strömungsrichtung des Rücklaufwassers gesehen sind in der Zweigleitung 64 das zweite Absperrorgan 68, ein Wasserspeicherraum 70, eine Pumpe 72, gegebenenfalls ein Absperrorgan 74, die Sekundärseite des Wärmepumpen-Verdampfers 52, ein Kaltwasserspeicherraum 76, eine zweite Pumpe 78 sowie ein drittes Absperrorgan 80 hintereinander eingefügt. Die Speicherräume 70, 76 sind vorzugsweise von Behältern oder Wasserbecken gebildet, die mit dem Außenraum in Verbindung stehen.

In der Rücklaufleitung ist zwischen der Anschlußstelle 66 und dem Heizungswasser-Wärmetauscher 26 ein viertes Absperrorgan 82 sowie zwischen der Abzweigstelle 62 und der Anschlußstelle 66 ein fünftes Absperrorgan 84 eingefügt.

In der Dampfzufuhrleitung 12 ist ein Durchflußregelorgan 86 angeordnet, das zur Steuerung mit einem Temperaturfühler 88 in Wirkverbindung steht. Die Wirkverbindung ist hierbei durch die Wirklinie 90 angedeutet. Der Temperaturfühler 88 ist in der Vorlaufleitung 54 angeordnet, und zwar in Strömungsrichtung gesehen jeweils nach dem Anschluß des Wärmetauschers 26 und des Kondensators 46. Alternativ ist es genausogut möglich, in der Rohrleitung 24, welche Gegendruck-Dampf führt, einen Druckfühler 92 anzuordnen und in Wirkverbindung mit dem Durchflußregelorgan 86 zu bringen.

Im Normalbetrieb des Heizkraftwerkes ist die Kupplung 36 gelöst, das heißt, die Wärmepumpe 42 ist nicht in Betrieb. Das vierte Absperrorgan 82 und das fünfte Absperrorgan 84 ist jeweils geöffnet, wogegen das zweite Absperrorgan 68, das dritte Absperrorgan 80 sowie das Absperrorgan 60 jeweils geschlossen ist. Auch sind die Pumpen 72 und 78 nicht in Betrieb, wogegen die Heizungswasser-Umwälzpumpe 58 sowie die für den Betrieb des Dampfkreislaufes erforderliche Kondensatpumpe 30 und Speisewasserpumpe 22 in Betrieb sind.

Der im Dampfkessel 10 erzeugte Dampf wird jetzt der Dampfturbine 14 zugeführt. Die bei der Entspannung des Dampfes gewonnene mechanische Energie wird im angeschlossenen elektrischen Generator 34 in elektrische Energie umgewandelt und an ein nicht dargestelltes Verbrauchsnetz abgegeben. Gleichzeitig wird Gegendruck-Dampf einer Anzapfung der Turbine 14 entnommen, durch die Leitung 16 dem Speisewasserbehälter 18 für die Vorwärmung des Speisewassers zugeleitet, das dann mittels der Speisewasserpumpe 22 dem Dampfkessel zugeführt wird.

Von einer weiteren Anzapfung der Dampfturbine 14 wird als Heizdampf dienender Gegendruck-Dampf entnommen und durch die Rohrleitung 24 dem Heizungswasser-Wärmetauscher 26 zur Erwärmung des Heizungswassers zugeführt. Das hierbei anfallende Kondensat wird durch die Rohrleitung 28 und die Kondensatpumpe 30 zum Speisewasserbehälter 18 gefördert.

Das im Heizsystem zur Wärmeversorgung der Wärmeverbraucher zirkulierende Heizungswasser fließt nach der Abkühlung im Wärmeverbraucher durch die Rücklaufleitung 56 dem Heizungswasser-Wärmetauscher zu und strömt nach der Erwärmung durch die Vorlaufleitung 54 dem Verbraucher zu, so daß der Kreislauf des Heizsystems geschlossen ist.

Die Zufuhr von Heizdampf bzw. Gegendruckdampf durch die Leitung 24 zum Heizungswasser-Wärmetauscher 26 und somit die Leistung dieses Wärmetauschers ist allein abhängig von der Frischdampfzufuhr vom Dampfkessel 10 zur Dampfturbine 14. Wird z. B. die Frischdampfzufuhr zur Dampfturbine 14 gesteigert, so steigt die Heizdampfabgabe ebenfalls an und somit wird die Wärmeleistung des Wärmetauschers 26 erhöht. In einem solchen Falle steigt auch die elektrische Energieabgabe des Generators 34, da eine Steigerung des Dampfdurchsatzes durch die Dampfturbine 14 auch deren mechanische Leistungsabgabe erhöht. Die elektrische Energieabgabe des Generators 34 steht daher in einem zwangsläufigen Verhältnis zur Wärmeleistung des Heizungswasser-Wärmetauschers 26, oder mit anderen Worten, eine Änderung der elektrischen Energieabgabe ist ohne Änderung der Wärmeabgabe in der vorliegenden Betriebsweise nicht möglich.

Zur Regelung der Wärmeabgabe des Heizungswasser-Wärmetauschers 26 an das zirkulierende Heizungswasser wird die Vorlauftemperatur am Temperaturfühler 88 erfaßt, mit einem Sollwert verglichen und bei Abweichungen das Durchflußregelorgan 86 entsprechend beeinflußt. Eine solche Regelung ist möglich, da in Heizsystemen die Zirkulation des Heizwassers meist konstant ist und sich somit Änderungen des Wärmebedarfs durch Änderungen der Vorlauftemperatur bemerkbar machen.

Alternativ kann auch der Druck des Heizdampfes vor seinem Eintritt in den Wärmetauscher 26 erfaßt werden und bei Abweichungen des Dampfdruckes von einem vorgegebenen Sollwert das Durchflußregelorgan 86 entsprechend beeinflußt werden, denn auch dieser Dampfdruck ändert sich bei Belastungsänderungen des Heizsystems.

Soll das Heizkraftwerk jetzt mit verringerter elektrischer Energieabgabe ohne Beeinflußung der augenblicklichen Wärmeabgabe an das Heizungssystem betrieben werden, so wird die Kupplung 36 eingeschaltet und somit die Wärmepumpe 42 in Betrieb genommen. Gleichzeitig wird die Pumpe 72 eingeschaltet, jeweils das Absperrorgan 74, das vierte Absperrorgan 82 sowie das Absperrorgan 60 geöffnet, wogegen das zweite Absperrorgan 68 und das dritte Absperrorgan 80 jeweils geschlossen ist.

Jetzt fördert die Pumpe 72 Wasser aus dem Wasserspeicherraum 70 zum Wärmepumpen-Verdampfer 52. Hier wird dieses Wasser unter Rücklauftemperatur abgekühlt und zum Kaltwasserspeicherraum 76 geleitet und hier gespeichert. Das Wasser des Speicherraums 70 besteht vorzugsweise aus Heizungsrücklaufwasser, das z. B. während des Normalbetriebs der Anlage durch Öffnen des zweiten Absperrorgans 68 zugeführt wurde.

Die bei der Abkühlung des Wassers im Verdampfer 52 gewonnene Wärme wird durch die Wärmepumpe auf ein höheres Temperaturniveau angehoben und im Kondensator 46, der jetzt in das Heizsystem eingeschaltet ist, an das Heizungswasser abgegeben. Es wird somit die bei der Abkühlung des Kaltwassers gewonnene Wärme unter Zuhilfenahme der Wärmepumpe den Wärmeverbrauchern als Nutzwärme zugeführt. Bei der Wärmepumpe handelt es sich hierbei um ein übliches System, das mit Verdichtung und Expansion eines Mediums arbeitet.

Da beim jetzigen Betriebszustand des Heizkraftwerkes von der Dampfturbine 14 zusätzlich der Verdichter 40 angetrieben werden muß, steht weniger Leistung für die elektrische Stromerzeugung zur Verfügung, so daß die elektrische Energieabgabe des Generators 34 verringert ist. Infolge der weiter oben erläuterten Regelung der Vorlauftemperatur bleibt die Wärmeabgabe an das Heizsystem dagegen unverändert.

Durch mehr oder weniger weites Öffnen des Absperrorgans 60 und des vierten Absperrorgans 82 kann der Heizungswasser-Durchfluß durch den Wärmepumpen-Kondensator 46 und den Heizungswasser-Wärmetauscher 26 eingestellt werden. Die Einstellung dieser Absperrorgane bzw. den Durchfluß durch den Wärmetauscher 26 und den Kondensator 46 wird man vorzugsweise so wählen, daß die Temperatur des Heizungswassers beim Austritt aus dem Wärmetauscher 26 gleich ist der Temperatur des Heizungswassers beim Austritt aus dem Kondensator 46. Mann kann also durch entsprechendes Aufteilen des Rücklaufwassers auf den Wärmetauscher 26 und den Kondensator 46 die Wärmeabgabe dieser Apparate an das durchfließende Heizungswasser beeinflußen. Zusammenfassend kann festgehalten werden, daß im jetztigen Betriebszustand ein Teil der von der Turbine abgegebenen mechanischen Leistung zur Schaffung eines Kaltwasserspeichers eingesetzt wird und daß somit für die elektrische Energieerzeugung entsprechend weniger mechanische Energie zur Verfügung steht und somit die Stromabgabe verringert ist.

Soll jetzt die elektrische Energieabgabe ohne Beeinflußung der augenblicklichen Wärmeabgabe an die Wärmeverbraucher auf einen z. B. maximalen Wert gesteigert werden, so wird die Wärmepumpe 42 durch Lösung der Kupplung 36 sowie die Pumpe 72 außer Betrieb genommen und die zweite Pumpe 78 eingeschaltet. Gleichzeitig wird jeweils das Absperrorgan 60, das fünfte Absperrorgan 84 und gegebenenfalls das Absperrorgan 74 geschlossen, wogegen das zweite Absperrorgan 68, das dritte Absperrorgan 80 und das vierte Absperrorgan 82 geöffnet ist.

Das vom Wärmeverbraucher in der Rücklaufleitung 56 zurückkommende Rücklaufwasser wird jetzt an der Abzweigstelle 62 in die Zweigleitung 64 geleitet und zum Wasserspeicherraum 70 geführt und dort gespeichert. Dieser Wasserspeicherraum war nämlich zumindest teilweise geleert, denn während der Betriebsperiode mit verringerter elektrischer Leistung wurde sein Inhalt unter Abkühlung im Verdampfer 52 in den Kaltwasserspeicherraum 76 gefördert. Für den Ersatz des abgezweigten Rücklaufwassers wird dem Kaltwasserspeicherraum 76 das dort gelagerte Kaltwasser entnommen und mit Hilfe der zweiten Pumpe 78 durch das geöffnete dritte Absperrorgan 80 an der Anschlußstelle 66 in die Rücklaufleitung 56 eingespeist und dem Heizungswasser-Wärmetauscher 26 zur Erwärmung zugeführt. Da die Kaltwassertemperatur geringer ist als die Temperatur des Heizungsrücklaufwassers muß das Heizungswasser im Heizungswasser-Wärmetauscher 26 jetzt um eine größere Temperaturspanne erwärmt werden. Dies hat zur Folge, ausgelöst durch den Temperaturfühler 88 bzw. den Druckfühler 92, daß die Heizdampfzufuhr zum Wärmetauscher 26 und somit die Frischdampfzufuhr zur Turbine 14 erhöht werden muß. Die Folge hiervon ist, daß die mechanische Leistungsabgabe der Turbine ansteigt und somit mehr mechanische Energie für die Erzeugung von elektrischer Energie vorhanden ist. Die elektrische Energieabgabe ist gesteigert ohne Beeinflußung der Wärmeabgabe an die Wärmeverbraucher.

Dieser Betriebszustand kann solange aufrecht erhalten werden, bis der Kaltwasserspeicherraum 76 leergefahren ist. Das während dieser Zeit im Wasserspeicherraum 70 gesammelte Rücklaufwasser wird bereitgehalten für die Abkühlung während des Betriebs mit verringerter elektrischer Leistungsabgabe, ein periodischer Betrieb der Anlage ist somit gewährleistet.

Selbstverständlich müssen die Volumina von Kaltwasserspeicherraum 76 und Wasserspeicherraum 70 auf die jeweilige Dauer des Schwachlast- bzw. Spitzenlastbetriebs sowie auf die Leistung der Anlage abgestimmt sein.

Soll in der vorliegenden Betriebsphase die Abgabe von elektrischer Energie nicht auf das höchstmögliche Maß gesteigert werden, so wird das zweite Absperrorgan 68 sowie das dritte Absperrorgen 80 jeweils etwas geschlossen und das fünfte Absperrorgan 84 entsprechend geöffnet. Jetzt wird das Heizungsrücklaufwasser an der Abzweigstelle 62 aufgeteilt. Ein Teil fließt durch die Zweigleitung 64 zum Wasserspeicher 70, der restliche Teil strömt zur Anschlußstelle 66. Durch die Beimischung einer entsprechenden Menge von Kaltwasser aus dem Kaltwasserspeicherraum 76 wird hier das Rücklaufwasser abgekühlt und dannn dem Wärmetauscher 26 zugeführt. Durch eine entsprechende Einstellung der vorgenannten Absperrorgane kann eine Aufteilung des Rücklaufwassers erreicht werden, die eine stufenlose Steigerung der elektrischen Energieabgabe zur Folge hat, die zwischen einem maximal erreichbaren Wert (zweites Absperrorgan 68 und drittes Absperrorgen 80 geöffnet, fünftes Absperrorgan 84 geschlossen) und dem Wert null, das heißt Normalbetrieb, liegt (fünftes Absperrorgan 84 geöffnet, zweites und drittes Absperrorgan 68 bzw. 80 geschlossen).

In Fig. 2 ist eine Ausführungsvariante bezüglich des Antriebs des Verdichters 40 der Wärmepumpe dargestellt.

Während in Fig. 1 der Verdichter durch die lösbare Kupplung 36 direkt von der Welle 32 der Dampfturbine angetrieben werden kann, wird im Ausführungsbeispiel gemäß Fig. 2 die Welle 38 des Verdichters 40 durch einen Elektromotor 94 angetrieben. Die Stromversorgung erfolgt hierhei unter Zwischenschaltung eines elektrischen Schaltorgans 96 vom elektrischen Generator 34. Gegebenenfalls kann die Stromversorgung auch aus einem nicht dargestellten Stromnetz erfolgen. Die vorbeschriebene Ausführungsform wird man dann bevorzugt anwenden, wenn z. B. aus Raumgründen eine Aufstellung des Verdichters 40 gewählt werden muß, die keine direkte Kupplung der Welle 38 an die Welle 32 der Dampfturbine bzw. des Generators zuläßt.

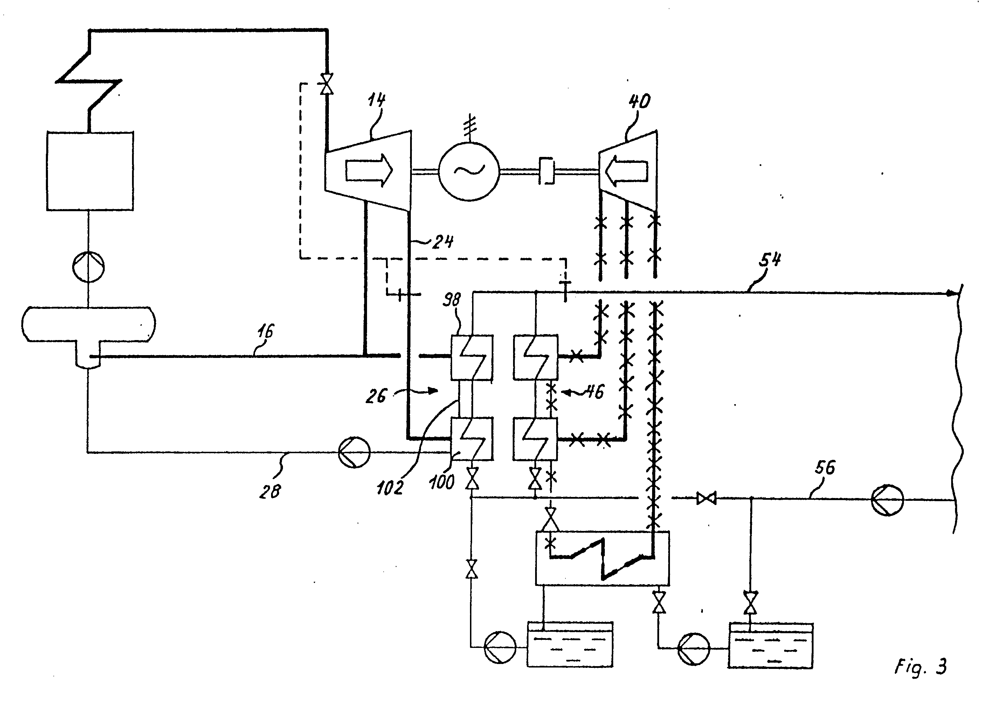

Zur Verbesserung des Wirkungsgrades der Anlage kann das Heizkraftwerk gemäß der Ausführungsvariante nach Fig. 3 ausgebildet sein. Gegenüber der Ausführungsform nach Fig. 1 besteht hier der Unterschied, daß der Heizungswasser-Wärmetauscher 26 sowie der Wärmepumpen-Kondensator 46 jeweils zwei Stufen aufweist. Zur Heizdampfversorgung ist die erste Stufe 98 des Wärmetauschers 26 mit der heizdampfführenden Leitung 16, die zweite Stufe dagegen mit der ebenfalls heizdampfführenden Leitung 24 verbunden. Die Abfuhr des Kondensats aus der ersten Stufe 98 erfolgt hierbei über die Verbindungsleitung 102 zur zweiten Stufe 100, von wo das Kondensat durch die Kondensatleitung 28 abgezogen werden kann. Der Heizdampf besteht auch hier aus Gegendruckdampf.

In ähnlicher Weise sind die beiden Stufen des Wärmepumpen-Kondensators 46 mit dem Verdichter 40 verbunden. Hierzu wird ausdrücklich auf Fig. 3 Bezug genommen, die dem Fachmann alles wesentliche offenbart, so daß sich nähere Ausführungen erübrigen.

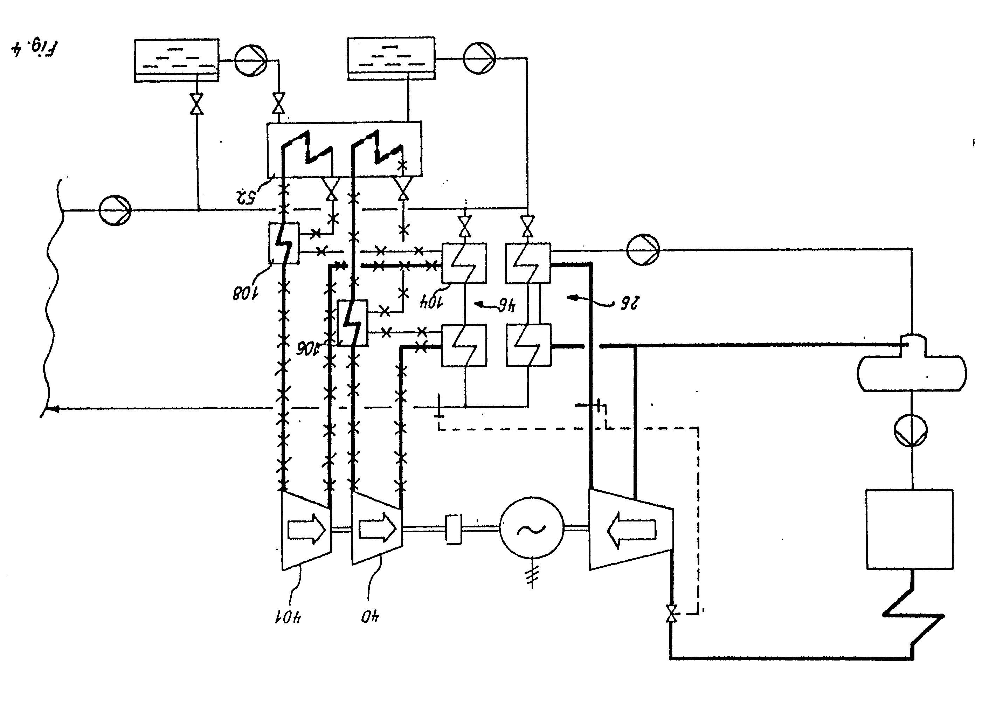

Fig. 4 zeigt eine Ausführungsvariante des Gegenstands der Fig. 3. Auch hier ist der Heizungswasser-Wärmetauscher 26 sowie der Wärmepumpen-Kondensator 46 jeweils mit zwei Stufen versehen. Im Unterschied zum Gegenstand der Fig. 3 ist zusätzlich noch ein zweiter Verdichter 401 vorgesehen, der mechanisch mit dem Verdichter 40 gekuppelt ist. Dieser zweite Verdichter 401 versorgt die zweite Stufe des Wärmepumpen-Kondensators 104 mit Arbeitsmedium.

Wie weiter aus Fig. 4 zu ersehen ist, weist der Wärmepumpen-Verdampfer 47 ebenfalls zwei Stufen auf, von denen je eine mit je einer Stufe des Wärmepumpen-Kondensators 46 in Verbindung steht. Diese Verbindung führt jeweils über einen Überhitzer 106, 108 in denen das dampfförmige Arbeitsmedium der Wärmepumpe vor dem Eintritt in die Verdichter überhitzt wird.

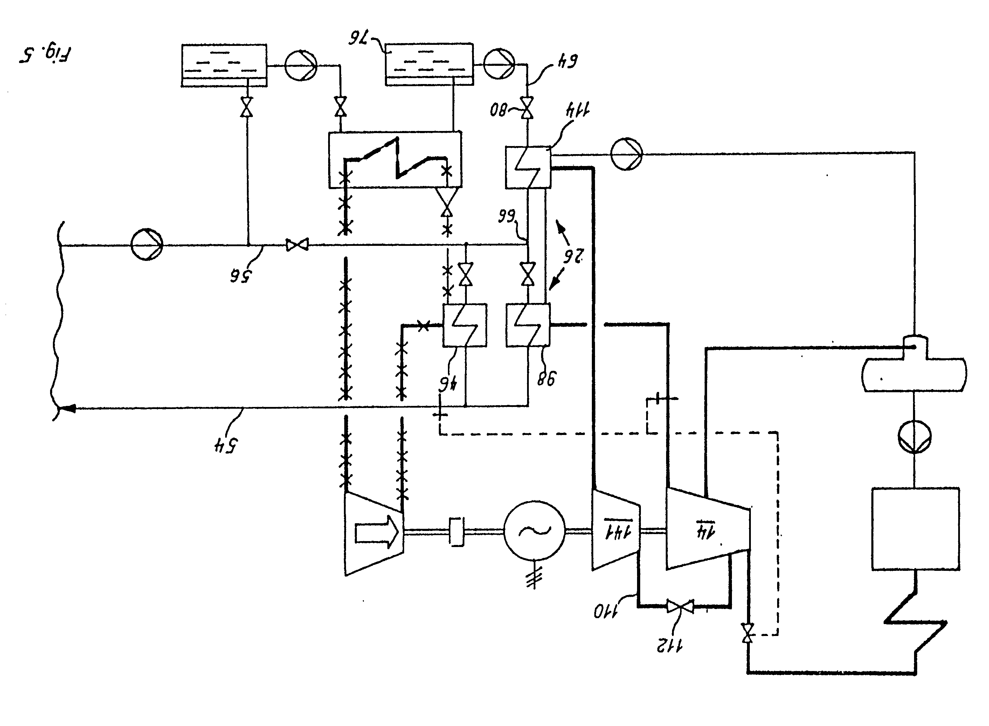

Fig. 5 zeigt eine weitere Ausführungsvariante des Gegenstands der Fig. 1, die zur Verbesserung des Anlagen-Wirkungsgrades beim Betrieb mit gesteigerter elektrischer Energieabgabe dient. Hier weist die Dampfturbine 14 eine Niederdruckstufe 141 auf, die Bestandteil der Dampfturbine 14 oder als separates Bauteil ausgeführt sein kann. Die Dampfversorgung dieser Niederdruckstufe erfolgt von einer Anzapfung der Dampfturbine 14 über die Leitung 110 mit eingefügtem Absperrorgan 112.

Der Heizungswasser-Wärmetauscher 26 weist hier eine erste Stufe 98 auf, die zwischen der Heizungsvorlaufleitung 54 und der Heizungsrücklaufleitung 56 angeordnet und die zur Heizdampfversorgung an die Dampfturbine 14 angeschlossen ist. Die zweite Stufe 114 des Wärmetauschers 26 ist zur Heizdampfversorgung an die Niederdruckstufe 141 angeschlossen. Bezüglich des Heizungswassers ist diese zweite Stufe 114 in der Zweigleitung 64 zwischen dem dritten Absperrorgan 80 und der Anschlußstelle 66 eingefügt.

Beim Betrieb der Anlage mit verringerter oder normaler elektrischer Leistungsabgabe ist das Absperrorgan 112 geschlossen, die Niederdruckstufe 141 somit nicht in Betrieb. Während des Betriebs mit gesteigerter elektrischer Energieabgabe dagegen wird das Absperrorgan 112 geöffnet und somit die Niederdruckstufe 141 in Betrieb genommen, so daß der zweiten Stufe 114 des Wärmetauschers 26 Heizdampf zugeführt wird. Die Dimensionierung ist hierbei so getroffen, daß das jetzt aus dem Kaltwasserspeicherraum 76 kommende Kaltwasser in der zweiten Stufe 114 auf die Temperatur des Rücklaufwassers angehoben und mit dieser Temperatur der ersten Stufe 98 zugeführt wird. Durch diese Maßnahme wird ein optimaler Wirkungsgrad der Anlage erreicht.

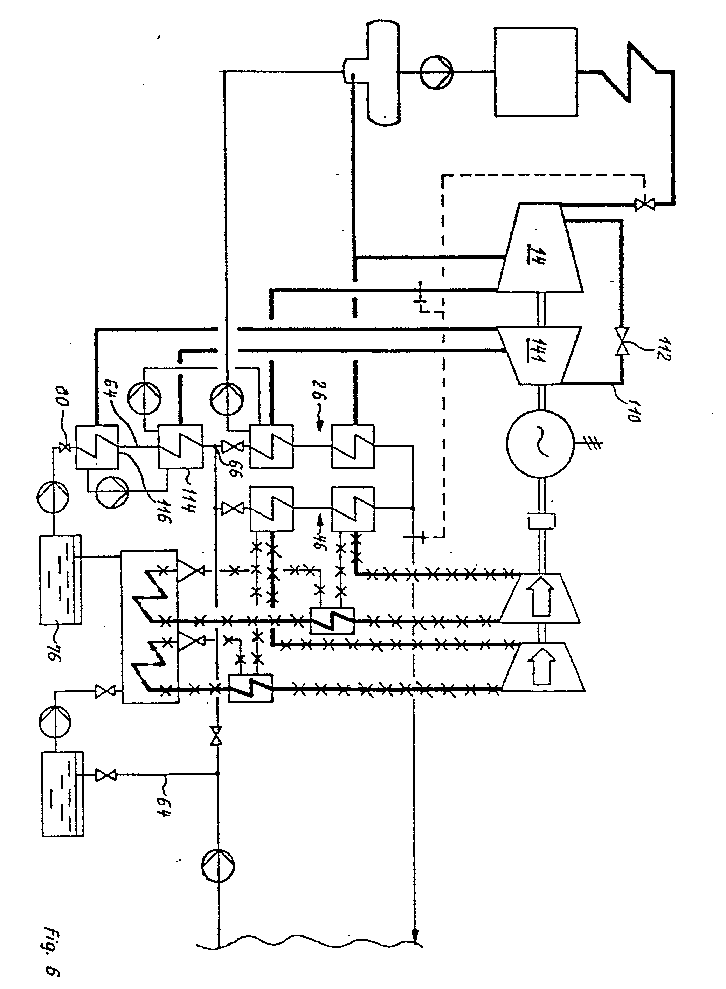

Fig. 6 zeigt schließlich eine Ausführungsform einer Anlage gemäß Fig. 4, die nach dem Prinzip der Anlage gemäß Fig. 5 erweitert ist. Wie aus der Fig. 6 deutlich zu ersehen ist, versorgt die Niederdruckstufe 141 neben der Stufe 114 des Heizungswasser-Wärmetauschers 26 noch eine weitere Stufe 116, die in Strömungsrichtung des Wassers gesehen, vor der Stufe 114 angeordnet ist. Die Stufen 114 und 116 des Wärmetauschers 26 sind somit gemeinsam zwischen dem Kaltwasserspeicherraum 76 bzw. dem dritten Absperrorgan 80 und der Anschlußstelle 66 in der Zweigleitung 64 angeordnet. Die Arbeitsweise der Anlage entspricht hier jenen Arbeitsweisen, die im Zusammenhang mit den Fig. 4 und 5 erläutert wurden, so daß sich hier näheres erübrigt. Hervorzuheben ist jedoch, daß durch die Wärmeübertragung in mehreren Stufen, durch die Überhitzung des Arbeitsmediums der Wärmepumpe sowie durch die zuschaltbare Niederdruckstufe 141 ein optimaler Wirkungsgrad der Anlage erreicht wird.

**Patentansprüche**

1. Verfahren zum Verändern der Abgabe von elektrischer Energie eines Heizkraftwerkes ohne Beeinflußung der Wärmeabgabe an angeschlossene Wärmeverbraucher, wobei die elektrische Energie in wenigstens einem von mindestens einer Gegendruck-Dampfturbine (14) angetriebenem elektrischen Generator (34) erzeugt wird und die Wärmeabgabe durch wenigstens einen mit Gegendruckdampf beheizten Heizungswasser-Wärmetauscher (26) erfolgt, der durch mindestens jeweils eine Heizungs-Vorlaufleitung (54) und Heizungs-Rücklaufleitung (56) mit wenigstens einem Wärmeverbraucher verbunden ist, dadurch gekennzeichnet, daß zur Verringerung der elektrischen Energieabgabe mit wenigstens einem Teil der unter Verwendung der Dampfturbine (14) erzeugten Energie der Verdichter (40, 401) einer Wärmepumpe (42) angetrieben wird, durch die Wärmepumpe (42) zuvor gespeichertes Heizungs-Rücklaufwasser unter Heizungswasser-Rücklauftemperatur abgekühlt und als Kaltwasser gespeichert wird, wobei die bei der Abkühlung gewonnene Wärmeenergie dem Heizungswasser zugeführt wird, und daß zur Steigerung der elektrischen Energieabgabe die gesamte in der Dampfturbine (14) erzeugte Energie in elektrische Energie umgewandelt an die Verbraucher abgegeben wird und gleichzeitig die Temperatur des Heizungs-Rücklaufwassers vor seinem Eintritt in

den Heizungswasser-Wärmetauscher (26) durch das Kaltwasser unter Heizungs-Rücklauftemperatur abgesenkt wird und daß in beiden Betriebszuständen die Dampfzufuhr zur Dampfturbine (14) jeweils so geregelt wird, daß die Wärmeabgabe an den Wärmeverbraucher in der gewünschten Größe eingehalten wird.

2. Verfahren nach Anspruch 1 zur Steigerung der elektrischen Energieabgabe, dadurch gekennzeichnet, daß das Rücklaufwasser durch direkte Zufuhr des Kaltwassers abgekühlt wird und daß eine mit der zugeführten Kaltwassermenge gleiche Menge des ungekühlten Rücklaufwassers dem Heizsystem entnommen, gespeichert und für die Abkühlung in der Wärmepumpe (42) während des Betriebs mit verringerter elektrischer Energieabgabe bereitgehalten wird.

3. Verfahren nach Anspruch 2, dadurch gekennzeichnet, daß die Kaltwassermenge je Zeiteinheit, die zugeführt wird, gleich ist jener Menge des Rücklaufwassers, die in der Zeiteinheit dem Heizkraftwerk zugeführt wird.

4. Verfahren nach einem der Ansprüche 1 bis 3 zur Steigerung der elektrischen Energieabgabe, dadurch gekennzeichnet, daß der Dampfturbine (14) mindestens ein Wiederdruckteil (141) zugeschaltet wird, die wenigstens eine zugeordnete Stufe (114, 116) des Heizungswasser-Wärmetauschers (26) mit Heizdampf versorgt (Fig. 5 und 6).

5. Verfahren nach einem der Ansprüche 1 bis 4, dadurch gekennzeichnet, daß das Rücklaufwasser in mehreren Stufen aufgeheizt wird.

6. Verfahren nach einem der Ansprüche 1 bis 5, dadurch gekennzeichnet, daß das Wasser bzw. Rücklaufwasser in mehreren Stufen des Wärmepumpen-Verdampfers (52) abgekühlt wird, wobei vorzugsweise die Verdichtung des Arbeitsmediums der Wärmepumpe (42) in mehreren Stufen erfolgt.

7. Verfahren nach einem der Ansprüche 1 bis 6 dadurch gekennzeichnet, daß das Arbeitsmedium der Wärmepumpe (42) vor dem Eintritt in den Verdichter (40, 401) durch das aus dem Wärmepumpenkondensator (52) austretende Arbeitsmedium überhitzt wird.

8. Anlage zur Durchführung des Verfahrens nach Anspruch 1, mit mindestens einer Gegendruck-Dampfturbine (14), einem an diese gekuppelten elektrischen Generator (34), einem durch einen Elektromotor (94) oder durch eine lösbare Wellenkupplung (36) von der Dampfturbine (14) antreibbaren Verdichter (40, 401) der Wärmepumpe, sowie mit mindestens einem Heizungswasser-Wärmetauscher (26), der zur Heizdampf-Versorgung an die Dampfturbine (14) angeschlossen und durch jeweils mindestens eine Heizungswasser-Vorlaufleitung (54) und Heizungswasser-Rücklaufleitung (56) an wenigstens einen Wärmeverbraucher angeschlossen ist, dadurch gekennzeichnet, daß der Elektromotor (94) vom Generator (34) speisbar ist, daß der Wärmepumpen- Kondensator (46) zur Wärmeabgabe an das Heizungswasser an die Vorlaufleitung (54) und Rücklaufleitung (56) unter Einfügung eines Absperrorgans (60) angeschlossen ist, daß die Rücklaufleitung (56) eine Abzweigstelle (62) aufweist, von der eine Zweigleitung (64) ausgeht, die stromab der Abzweigstelle (62) an der Anschlußstelle (66) wieder in die Rücklaufleitung (56) mündet wobei zwischen der Abzweigstelle (62) und der Anschlußstelle (66) ein fünftes Absperrorgan (84) eingefügt ist, daß die Zweigleitung (64), in Strömungsrichtung gesehen, ein zweites Absperrorgan (68), einen Wasserspeicherraum (70), eine Pumpe (72), den Verdampfer (52) der Wärmepumpe, einen Kaltwasserspeicherraum (76) eine zweite Pumpe (78) sowie ein drittes Absperrorgan (80) enthält, daß zwischen der Anschlußstelle (66) und dem Heizungswasser-Wärmetauscher (26) ein viertes Absperrorgan (82) in die Heizungs-Rücklaufleitung eingefügt ist und daß in der Dampfzuleitung (12) zur Dampfturbine (14) ein Durchflußregelorgan (86) angeordnet und zur Steuerung mit einem die Vorlauftemperatur erfassenden Temperaturfühler (88) oder einem den Heizdampfdruck erfassenden Druckfühler (92) verbunden ist.

9. Anlage nach Anspruch 8, dadurch gekennzeichnet, daß der Heizungswasser-Wärmetauscher (26) mehrere Wärmetauschstufen aufweist, von denen wenigstens eine Stufe (114, 116) zur Heizdampfversorgung mit einem der Dampfturbine zuschaltbaren Dampfturbinen-Wiederdruckteil (141) verbunden ist.

## Claims

1. Method of changing the output of electrical energy of a combined heat and power station without affecting the heat output to connected heat consumers, in which method the electrical energy is generated in at least one electrical generator (34) driven by at least one backpressure steam turbine (14) and the heat output takes place by means of at least one heating water heat exchanger (26) heated by backpressure steam, which heating water heat exchanger is connected to at least one heat consumer by means of at least one heating supply main (54) and one heating return main (56), characterized in that, in order to reduce the electrical energy output, the compressor (40, 401) of a heat pump (42) is driven by at least a part of the energy generated by the use of the steam turbine (14), heating return water previously stored is cooled to below the heating water return temperature by the heat pump (42) and stored as cold water, the heat energy gained during the cooling being supplied to the heating water, and that in order to increase the electrical energy output, the whole of the energy generated in the steam turbine (14) is supplied to the consumers converted into electrical energy and, simultaneously, the temperature of the heating return water is reduced by the cold water to below the heating return temperature before the heating return water enters the heating water heat exchanger (26) and that in both operating conditions, the steam supplied to the steam turbine (14) is controlled in such a way that the heat output to the heat consumers is maintained at the desired level.

2. Method according to Claim 1 for increasing the electrical energy output, characterized in that the return water is cooled by direct supply of cold water and that a quantity of the uncooled return water equal to the cold water quantity supplied is extracted from the heating system, stored and held ready for cooling in the heat pump (42) during the operation with reduced electrical energy output.

3. Method according to Claim 2, characterized in that the cold water quantity supplied per unit time is equal to that quantity ot return water which is supplied to the combined heat and power station in the unit time.

4. Method according to one of the Claims 1 to 3 for increasing the electrical energy output, characterized in that at least one low-pressure part (141) is connected to the steam turbine (14), which low-pressure part supplies at least one associated stage (114, 116) of the heating water heat exchanger (26) with heating steam (Figures 5 and 6).

5. Method according to one of the Claims 1 to 4, characterized in that the return water is heated in several stages.

6. Method according to one of the Claims 1 to 5, characterized in that the water or return water is cooled in several stages of the heat pump evaporator (52), the compression of the working medium of the heat pump (42) preferably taking place in several stages.

7. Method according to one of the Claims 1 to 6, characterized in that the working medium of the heat pump (42) is superheated before entry into the compressor (40, 401) by the working medium emerging from the heat pump condenser (52).

8. Installation for carrying out the method according to Claim 1, having at least one backpressure steam turbine (14), an electrical generator (34) coupled to the latter, a compressor (40, 401) of the heat pump which can be driven by an electric motor (94) or by the steam turbine (14) via a releasable shaft coupling (36), and having at least one heating water heat exchanger (26), which is connected, for its supply of heating steam, to the steam turbine (14) and is connected by at least one heating water supply main (54) and at least one heating water return main (56) to at least one heat consumer, characterized in that the electric motor (94) can be supplied from the generator (34), that the heat pump condenser (46) is connected to the supply main (54) and the return main (56), with the inclusion of a shut-off unit (60), for the purpose of heat output to the heating water, that the return main (56) has a branch position (62) from which a branch main (64) emerges, which branch main re-enters the return main (56) downstream of the branch position (62) at the connection point (66), a fifth cut-off unit (84) being included between the branch position (62) and the connection position (66), that the branch main (64) contains, seen in the flow direction, a second shut-off unit (68), a water storage space (70), a pump (72), the evaporator (52) of the heat pump, a cold water storage space (76), a second pump (78) and a third shut-off unit (80), that a fourth shut-off unit (82) is included in the heating return main between the connection position (66) and the heating water heat exchanger (26) and that, for the purpose of control, a flow control unit (86) is located in the steam supply pipe (12) to the steam turbine (14) and is connected for controlling to a temperature sensor (88) recording the supply main temperature or to a pressure sensor (92) recording the heating steam pressure.

9. Installation according to Claim 8, characterized in that the heating water heat exchanger (26) has several heat exchange stages of which at least one stage (114, 116) is connected, for heating steam supply purposes, with a steam-turbine low-pressure part which can be connected to the steam turbine.

**Revendications**

1. Procédé pour modifier la fourniture d'énergie électrique d'une centrale thermique sans influer sur la transmission de chaleur à des consommateurs de chaleur qui y sont raccordés, l'énergie électrique étant produite dans au moins un générateur électrique (34) entraîné par au moins une turbine à vapeur à contre-pression (14) et la transmission de chaleur étant effectuée par au moins un échangeur de chaleur (26) à eau de chauffage qui est chauffée par de la vapeur en contre-pression et qui est raccordé à au moins un consommateur de chaleur par au moins une conduite de chauffage aller (54) et une conduite de chauffage retour (56), caractérisé par le fait que pour diminuer la fourniture d'énergie électrique, le compresseur (40, 401) d'une pompe à chaleur (42) est entraîné par au moins une partie de l'énergie produite en utilisant la turbine à vapeur (14), que l'eau de chauffage retour préalablement stockée est refroidie en-dessous de la température de l'eau de chauffage retour par la pompe à chaleur (42) et est stockée en tant qu'eau froide, l'énergie thermique obtenue lors du refroidissement étant cédée à l'eau de chauffage, et que pour augmenter la fourniture d'énergie électrique, toute l'énergie produite dans la turbine à vapeur (14) est délivrée, transformée en énergie électrique, au consommateur de chaleur et que simultanément la temperature de l'eau de chauffage retour, avant son entrée dans l'échangeur de chaleur (26) à eau de chauffage, est abaissée par l'eau froide en dessous de la température de chauffage retour et que dans les deux modes de fonctionnement, l'amenée de la vapeur à la turbine (14) est respectivement réglée de manière que la transmission de chaleur au consommateur soit maintenue au niveau désiré.

2. Procédé selon la revendication 1 pour augmenter la fourniture d'énergie électrique, caractérisé par le fait que l'eau de retour est refroidie par l'amenée directe de l'eau froide et qu'une quantité d'eau de retour non refroidie égale à la quantité d'eau froide amenée, est prélevée sur le système de chauffage, stockée et maintenue prête pour le refroidissement dans la pompe à chaleur (42) pendant le fonctionnement avec fourniture réduite d'énergie électrique.

3. Procédé selon la revendication 2, caractérisé par le fait que la quantité d'eau froide qui est amenée par unité de temps est égale à la quantité d'eau de retour qui est amenée à la centrale thermique pendant l'unité de temps.

4. Procédé selon l'une des revendications 1 à 3 pour augmenter la fourniture d'énergie électrique, caractérisé par le fait qu'à la turbine à vapeur (14) est raccordée au moins une partie basse pression (141) qui alimente en vapeur de chauffage au moins un étage y associé (114, 116) de l'échangeur de chaleur (26) à eau de chauffage (figures 5 et 6).

5. Procédé selon l'une des revendications 1 à 4, caractérisé par le fait que l'eau de retour est chauffée dans plusieurs étages.

6. Procédé selon l'une des revendications 1 à 5, caractérisé par le fait que l'eau ou l'eau de retour est refroidie dans plusieurs étages de l'évaporateur (52) de la pompe à chaleur, la compression du fluide de travail de la pompe à chaleur (42) s'effectuant de préférence dans plusieurs étages.

7. Procédé selon l'une des revendications 1 à 6, caractérisé par le fait que le fluide de travail de la pompe à chaleur (42) avant l'entrée dans le compresseur (40, 401) est surchauffé par le fluide de travail sortant du condenseur (52) de la pompe à chaleur.

8. Installation pour la mise en oeuvre du procédé selon la revendication 1, comprenant au moins une turbine à vapeur à contre-pression (14), un générateur électrique (34) accouplé à celle-ci, un compresseur (40, 401) de la pompe à chaleur entraîné par un moteur électrique (94) ou par un accouplement amovible (36) de l'arbre de la turbine à vapeur (14), ainsi qu'au moins un échangeur de chaleur (26) à eau de chauffage qui est raccordé à la turbine (14) pour l'alimentation en vapeur de chauffage et relié à au moins un consommateur de chaleur par respectivement au moins une conduite d'eau de chauffage aller (54) et une conduite d'eau de chauffage retour (56), caractérisée par le fait que le moteur électrique (94) est alimenté par le générateur (34), que le condenseur (46) de la pompe à chaleur pour la transmission de la chaleur à l'eau de chauffage est raccordé à la conduite aller (54) et à la conduite retour (56) avec intercalation d'un organe d'arrêt (60), que la conduite retour (56) présente un embranchement (62) d'où part une conduite dérivée (64) qui, en aval de l'embranchement (62), débouche à nouveau dans la conduite retour (56) au point de jonction (66), un cinquième organe d'arrêt (84) étant intercalé entre l'embranchement (62) et le point de jonction (66), que la conduite dérivée (64), vue dans le sens de l'écoulement, comporte un deuxième organe d'arrêt (68), un réservoir d'eau (70), une pompe (72), l'évaporateur (52) de la pompe à chaleur, un réservoir d'eau froide (76), une deuxième pompe (78) ainsi qu'un troisième organe d'arrêt (80), qu'entre le point de jonction (66) et l'échangeur de chaleur (26) à eau de chauffage, un quatrième organe d'arrêt (82) est inséré dans la conduite de chauffage retour et que dans la conduite d'amenée de vapeur (12) à la turbine (14) est installé un organe de réglage du débit (86) qui, pour la commande, est raccordé à une sonde pyrométrique (88) déterminant la température aller ou à un capteur de pression (92) déterminant la pression de la vapeur de chauffage.

9. Installation selon la revendication 8, caractérisée par le fait que l'échangeur de chaleur (26) à eau de chauffage comporte plusieurs étages d'échange de chaleur dont au moins un étage (114, 116) pour l'alimentation en vapeur de chauffage est raccordé à une partie basse pression (141) pouvant être raccordée à la turbine à vapeur.

0 099 501

Fig. 2

Fig. 1

Fig. 3

0 099 501

Fig. 4

Fig. 5

Fig. 6